# EUROPÄISCHE PATENTSCHRIFT

(11) **EP 1 818 727 B1**
(45) Veröffentlichungstag und Bekanntmachung des Hinweises auf die Patenterteilung: **11.04.2012**
(21) Anmeldenummer: 07101788.3
(22) Anmeldetag: 06.02.2007
(51) Int. Cl.: G03G 15/00, G06F 21/00

(54) **Verfahren zur sicheren Übertragung von Betriebsdaten**
Method for safe transmission of operating data
Procédé destiné à la transmission sûre de données d'exploitation

(30) Priorität: 13.02.2006 DE 102006006438
(43) Veröffentlichungstag der Anmeldung: 15.08.2007
(73) Patentinhaber: Heidelberger Druckmaschinen Aktiengesellschaft, 69115 Heidelberg (DE)
(72) Erfinder: Oelsner, Tom, 60439 Frankfurt/Main (DE)

(56) Entgegenhaltungen:
- EP-A- 1 550 921
- WO-A-2006/009238
- WO-A-2007/019565
- DE-A1- 10 154 600

## Beschreibung

Die vorliegende Erfindung betrifft ein Verfahren zur Übertragung von Betriebsdaten bei Maschinen der grafischen Industrie über ein öffentlich zugängliches Kommunikationsnetz zu wenigstens einem über das öffentliche Kommunikationsnetz erreichbaren Verwaltungsrechner.

Moderne Druckmaschinen und andere Maschinen der grafischen Industrie verfügen zunehmend über durch Rechner gesteuerte Komponenten. Diese Ausrüstung von Druckmaschinen mit Computern ist Ausdruck der immer weiter fortschreitenden Automatisierung bei der Bedienung von modernen Druckmaschinen. Sowohl die Druckmaschine selbst als auch die elektronischen Steuerungskomponenten bedürfen jedoch einer regelmäßigen Wartung, welche bis vor wenigen Jahren durch einen zuständigen Servicetechniker vor Ort beim Kunden der Maschine erfolgen musste. In den letzten Jahren wurden zunehmend innovative Fernwartungsverfahren umgesetzt, mit deren Hilfe der Besuch von Servicetechnikern auf ein Minimum reduziert werden konnte. Der Kern dieser Fernwartungsverfahren liegt darin, dass bestimmte Betriebsparameter einer Druckmaschine vom Betreiber der Druckmaschine über ein Datennetz an den Hersteller der Druckmaschine übertragen werden können, wodurch der Hersteller die Möglichkeit erhält, den aktuellen Zustand der Druckmaschine auszuwerten und gegebenenfalls Wartungs- und Reparaturbedarf zu erkennen. In Abhängigkeit des erkannten Bedarfs wird dann Servicepersonal zum Kunden geschickt, falls dies notwendig sein sollte. Neben der Übertragung von Betriebsdaten von der Druckmaschine des Kunden zum Hersteller, kann zudem auch der umgekehrte Weg beschritten werden, um Daten vom Hersteller zum Kunden zu übertragen. In diesem Fall kann der Hersteller aus der Ferne Einstellungen an der Druckmaschine des Kunden ändern, um zum Beispiel stehende Probleme zu lösen.

Ein solches Fernwartungssystem ist für Kopierer aus der EP 0 599 523 B 1 bekannt. In dem Patent wird ein Verfahren beschrieben, mit welchem Betriebsdaten eines Kopiergeräts über ein Modem zum Rechner des Herstellers übertragen werden können, wobei diese

Datenübertragung zu vorgegebenen Zeiten oder auf Anfrage beim Hersteller geschieht. Falls bei einer Druckmaschine eines Kunden ein Fehler auftritt, so kann der Kunde über eine Benutzerschnittstelle eine Kommunikationsverbindung zur Ferndiagnose und zur Fernwartung zum Hersteller aufbauen, wobei automatisch die Identität der Maschine und Betriebsdaten mit oder ohne Hinzufügen von zusätzlichen Informationen des Betreibers zum Hersteller gesendet werden. Eine telefonische Kontaktaufnahme zur Einleitung des Datentransports vom Kunden zum Hersteller ist hierbei nicht mehr erforderlich. Durch die Übermittlung der Maschinenidentität kann der Hersteller sofort erkennen, um welche Maschine und um welchen Kunden es sich handelt. Dieses System weist jedoch den Nachteil auf, dass die Übertragung von Betriebsdaten zum Hersteller grundsätzlich nur vom Kunden aus gestartet werden kann. Dies ist zum einen unter Sicherheitsaspekten auch sinnvoll, da so gewährleistet ist, dass kein Dritter von außen die Datenübertragung vom Rechner des Kunden an einen unbefugten Rechner initiieren kann. Allerdings weist das vorliegende Verfahren in der EP 0 599 523 B1 weiterhin den Nachteil auf, dass die Übertragung der Daten vom Rechner der Druckmaschine zum Rechner des Herstellers ungesichert erfolgt. Sobald also die Datenübertragung vom Druckmaschinenrechner zum Rechner des Herstellers vom Kunden in die Wege geleitet wurde, besteht die Gefahr, dass Unbefugte die Daten manipulieren und mitschneiden.

Aus der Europäischen Patentanmeldung EP 1 550 921 A1 ist ein mulitfunktionaler digitaler Farbkopierer bekannt, welcher über ein Kommunikationsnetzwerk mit einem Server verbunden ist. Der Kopierer weist ein Bedienpult auf, über welches der Kopierer bedient werden kann. Eingaben über das Bedienpult werden zunächst verschlüsselt und auf einem nichtflüchtigen Speichermedium abgelegt. Von diesem nichtflüchtigen Speichermedium werden die Daten entschlüsselt an die Systemsteuerung des Kopierers weitergeleitet. Umgekehrt werden Daten von der Systemsteuerung, welche zu den nichtflüchtigen Speicher gesendet werden, ebenfalls verschlüsselt. Die Verschlüsselung der Daten auf dem nichtflüchtigen Speicher dient dazu, zu verhindern, dass unbefugte Dritte, welche den nichtflüchtigen Speicher ausbauen, Zugang auf dort gespeicherte private und persönliche Daten haben. Da die Systemsteuerung keinen nichtflüchtigen Speicher enthält, besteht hier dieses Zugriffsproblem nicht, da nach dem Abschalten des Geräts alle Daten sofort gelöscht werden. Die Daten auf dem nichtflüchtigen Speicher bleiben jedoch erhalten und werden aus diesem Grund verschlüsselt. Die Systemsteuerung überträgt jedoch die Daten zu einem über ein öffentliches Kommunikationsnetzwerk verbunden Server im unverschlüsselten Zustand, so dass hier Dritte die Daten mitlesen können. So besteht hier weiterhin die Problematik, dass unbefugte Dritte öffentlich übertragene Daten entschlüsseln können.

Aus der deutschen Offenlegungsschrift DE 101 54 600 A1 ist ein Verbrauchsartikelbestellungsunterstützungssystem bekannt. Dieses System soll Kunden dabei unterstützen, Verbrauchsartikel für Peripheriegeräte, welche der regelmäßigen Nachfüllung bedürfen, zu bestellen. Dabei wird ständig der Zustand der Verbrauchsartikel des Peripheriegeräts überwacht, um den Benutzer rechtzeitig über den Bedarf zum Nachfüllen des Verbrauchsartikels zu benachrichtigen. Eine verschlüsselte Übertragung von Daten und das verschlüsselte Abspeichern von Daten geht daraus nicht hervor.

Angesichts der Nachteile des Stands der Technik ist es Aufgabe der vorliegenden Erfindung, ein Verfahren zu schaffen, welches eine sehr sichere Datenübertragung von Rechnern von Druckereibetreibern zu Rechnern eines Druckmaschinenherstellers erlaubt.

Erfindungsgemäß wird die Aufgabe durch Patentanspruch 1 gelöst. Besonders vorteilhafte Ausgestaltungen der Erfindung sind den Unteransprüchen und den Zeichnungen zu entnehmen.

Das erfindungsgemäße Verfahren zur Übertragung von Betriebsdaten bei Maschinen der grafischen Industrie über ein öffentlich zugängliches Kommunikationsnetz zu einem Verwaltungsrechner des Herstellers lässt sich grundsätzlich für sämtliche Maschinen der grafischen Industrie einsetzen, welche über einen elektronischen Steuerungsrechner verfügen sowie eine entsprechende Kommunikationsschnittstelle zur Anbindung an ein Kommunikationsnetz. Es kann sich dabei um Druckmaschinen, Stanzen und andere Maschinen zur Druckweiterverarbeitung handeln, welche über einen handelsüblichen PC eine Verbindung mit dem Internet aufbauen können. Erfindungsgemäß ist der Maschine in der grafischen Industrie wenigstens ein Rechner zugeordnet, welcher permanent oder in bestimmten zeitlichen Abständen Betriebsdaten der Maschine protokolliert und abspeichert. Die Betriebsdaten werden jedoch nicht nur einfach abgespeichert sondern zusätzlich verschlüsselt, sodass beim Zugriff durch Unbefugte auf den Rechner der Maschine keine Einsicht in die Daten der Maschine genommen werden kann. Die derartig verschlüsselten Betriebsdaten werden dann über ein öffentlich zugängliches Kommunikationsnetz wie das Internet zu dem Verwaltungsrechner beim Hersteller der Maschine übertragen und dort abgespeichert. Durch die sofortige Verschlüsselung der Betriebsdaten auf dem Maschinenrechner wird eine höchst mögliche Sicherheit mit Bezug auf den Zugriff durch Unbefugte ermöglicht.

Dies ist umso wichtiger, da die Maschinen in einer Druckerei inzwischen meist über ein Netzwerk wie ein Intranet miteinander verbunden sind, welches wiederum mit dem Internet in Verbindung steht. In diesem Fall kann bei fehlenden Schutzmaßnahmen relativ einfach ein Ausspionieren von Daten auf den Rechnern der in der Druckerei vorhandenen Maschinen passieren. Dies wird jedoch durch die erfindungsgemäße verschlüsselte Abspeicherung von Betriebsdaten auf dem der jeweiligen Maschine zugeordneten Rechner wirkungsvoll unterbunden, da Unbefugte mit den verschlüsselten Daten nichts anfangen können. Der entsprechende Schlüssel ist nur dem Hersteller der Maschine bekannt, sodass nur der Hersteller auf dem Verwaltungsrechner die Betriebsdaten entschlüsseln und auswerten kann. Auf diese Art und Weise soll auch den Betreibern einer Druckmaschine die Angst genommen werden, dass durch die Fernwartung und Übertragung von Betriebsdaten der Druckmaschine an den Hersteller der Druckmaschine eventuell eine Möglichkeit geschaffen wird, dass Konkurrenten an diese Betriebsdaten gelangen können, um so über Aufträge und Vorgehensweisen einer Druckerei Kenntnis zu erlangen.

In einer ersten Ausgestaltung der Erfindung ist vorgesehen, dass die Betriebsdaten über das öffentlich zugängliche Kommunikationsnetz verschlüsselt übertragen werden. Diese zusätzliche verschlüsselte Übertragung der bereits auf dem Maschinenrechner verschlüsselt abgelegten Betriebsdaten erhöht die Sicherheit weiter. Durch die verschlüsselte Übertragung der Daten lässt sich eine etwaige Veränderung der verschlüsselten Betriebsdaten auf dem Wege der Übertragung über das öffentlich zugängliche Kommunikationsnetz erkennen und die Datenübertragung gegebenenfalls abbrechen, falls eine Veränderung festgestellt wird. Eine Veränderung der Daten bei der Übertragung lässt nämlich vermuten, dass entweder Fehler aufgetreten sind oder dass jemand versucht, die Daten zu manipulieren.

Des Weiteren ist vorgesehen, dass die Betriebsdaten vor der Abspeicherung in dem der Maschine aus der grafischen Industrie zugeordneten Rechner mittels einer Kodierung vor Veränderung geschützt werden. Hierbei können sowohl symmetrische als auch asymmetrische Verschlüsselungsverfahren zur Anwendung kommen, wobei asymmetrische Verfahren mit Public/Private-Key Algorithmen bevorzugt werden. Weiterhin können die Daten vor dem Abspeichern mit einer Prüfsumme, einem so genannten Hashcode, versehen und so vor Veränderung geschützt werden. Somit ist sichergestellt, dass die beim Betrieb einer Druckmaschine gewonnenen Daten nur im verschlüsselten Zustand abgespeichert werden und gegen den Zugriff durch Unbefugte zuverlässig geschützt werden.

In einer besonders vorteilhaften Ausgestaltung der Erfindung ist vorgesehen, die Betriebsdaten vor der Abspeicherung in dem der Maschine aus der grafischen Industrie zugeordneten Rechner einer Plausibilitätsprüfung unterzogen werden. Mit der Plausibilitätsprüfung kann sichergestellt werden, dass nur sinnvolle Betriebsdaten der Druckmaschine erfasst und etwaige Manipulationen bei der Erfassung von Betriebsdaten festgestellt werden. Sollten an einzelnen Sensoren der Maschine Manipulationen vorgenommen worden sein oder sollten bei der Erfassung Fehler auftreten, so kann dies mittels des Plausibilitätschecks erkannt werden, ein entsprechender Vermerk in der entsprechenden Datei gemacht und dem Hersteller gemeldet werden. Auch ein Ausfall von Sensoren kann auf diese Weise detektiert werden, woraufhin entsprechende Service- oder Wartungsmaßnahmen in die Wege geleitet werden können.

Vorteilhafterweise ist vorgesehen, dass der Verwaltungsrechner mit einer digitalen Signatur versehen ist und dass die Betriebsdaten von dem der Maschine in der grafischen Industrie zugeordneten Rechner über das öffentliche Kommunikationsnetz nur zu einem Rechner übertragen werden, welcher dieselbe digitale Signatur aufweist. Durch die Einführung einer derartigen Signatur wird zuverlässig verhindert, dass die in dem der Maschine zugeordneten Rechner abgespeicherten Betriebsdaten an unbefugte Dritte weitergeleitet werden können. Die Betriebsdaten können auf diese Art und Weise nur an Rechner übertragen werden, welche mit einer entsprechenden digitalen Signatur versehen sind, dies sind in diesem Fall ausschließlich dafür vorgesehenen Verwaltungs- oder Wartungsrechners des Herstellers der jeweiligen Maschine. Somit haben weder konkurrierende Druckereien noch konkurrierende Hersteller die Möglichkeit, auf die Betriebsdaten einer fremden Maschine zuzugreifen.

Es ist des Weiteren vorgesehen, dass der erfolgreiche Empfang der Betriebsdaten durch den Verwaltungsrechner über ein Quittiersignal an den der Maschine aus der grafischen Industrie zugeordneten Rechner signalisiert wird. Mit einem solchen Quittiersignal an den Maschinenrechner kann die ordnungsgemäße Übertragung der Betriebsdaten an den Verwaltungsrechner des Herstellers überprüft werden. Nur wenn die Übertragung der Betriebsdaten vom Verwaltungsrechner als erfolgreich abgeschlossen markiert wird, erfolgt die Abgabe des Quittiersignals an den Rechner bei der Maschine des Kunden. Die erfolgreich empfangenen Quittiersignale werden auf dem Rechner des Kunden gespeichert, so dass die erfolgreiche Datenübermittlung an den Verwaltungsrechner des Herstellers auf dem Rechner des Kunden jederzeit nachvollzogen werden kann. Damit wird sichergestellt, dass die für die erfolgreiche Wartung der Maschine benötigten Daten auch tatsächlich beim Hersteller angelangt sind und gegebenenfalls erforderliche Wartungs- und Reparaturmaßnahmen vom Hersteller erkannt werden. Sollten ein oder mehrere Quittierungssignale den Rechner der Maschine nicht erreichen, so bedeutet dies, dass die Datenübertragung in ein oder mehreren Fällen fehlgeschlagen ist. Da in diesem Fall die Gefahr besteht, dass die Maschine aufgrund der fehlenden Datenübertragung vom Hersteller nicht korrekt gewartet wird, kann der Rechner der Maschine derart programmiert sein, dass beim Ausbleiben von einem oder mehreren Quittiersignalen eine Abschaltung der Maschine vorgenommen wird, um das Auftreten von irreparablen Schäden an der Maschine zu verhindern. Zumindest können stufenweise kritische Funktionen der Maschine abgeschaltet werden, so dass zumindest eine Gefährdung des Bedienpersonals bei ausbleibenden Wartungszugriffen des Herstellers vermieden werden kann.

In einer Ausgestaltung der Erfindung ist vorgesehen, dass dem der Maschine aus der grafischen Industrie zugeordneten Rechner feste Übertragungszeitpunkte zugeordnet sind, zu denen der Rechner Betriebsdaten an den Verwaltungsrechner überträgt. In diesem Fall sind in dem Rechner der Maschine entweder feste Übertragungszeitpunkte einprogrammiert, oder dem Rechner der Maschine werden von dem Verwaltungsrechner aus die entsprechenden Zeitpunkte vorgegeben, zu denen eine Übertragung von Betriebsdaten zu erfolgen hat. Falls zu den derart vorgegebenen Zeitpunkten eine Übertragung von Betriebsdaten ausbleibt, so wird dies zunächst vom Verwaltungsrechner erfasst und protokolliert. Zusätzlich kann eine Rückmeldung vom Verwaltungsrechner zu der Maschine des Kunden erfolgen, um gegebenenfalls sicherheitsrelevante Funktionen oder die ganze Maschine außer Betrieb zu nehmen, um die Gefährdung des Bedienpersonals oder irreparable Schäden an der Maschine zu verhindern. Während in der zuvor erwähnten Ausführungsform diese gestuften Sicherheitsmaßnahmen beim Ausbleiben des Quittiersignals vom Rechner der Maschine ausgelöst werden, werden bei dieser Ausführungsform die Sicherheitsmaßnahmen vom Verwaltungsrechner des Herstellers ausgelöst.

Um den Verwaltungsrechner und den Rechner der Maschine vor unbefugten Zugriffen auf Daten zu schützen, ist es von Vorteil, wenn sowohl der Verwaltungsrechner als auch der Rechner der Maschine vom öffentlich zugänglichen Kommunikationsnetz durch eine Zugangsschutzeinrichtung getrennt sind. In diesem Fall werden sowohl der Verwaltungsrechner als auch der Rechner der Maschine vom Internet jeweils durch eine Firewall geschützt, so dass zumindest aus dem Internet kein Zugriff auf die Rechner möglich ist. Wenn mehrere Maschinen oder Rechner in einer Druckerei über ein Intranet miteinander vernetzt sind, so wird die Firewall zwischen dem Intranet der Druckerei und dem Internet installiert. Mit diesen Sicherheitsmaßnahmen kann die Datensicherheit sowohl bei den Druckereibetreibern als auch beim Hersteller weiter verbessert werden.

Die vorliegende Erfindung wird nachfolgend anhand mehrerer Figuren näher beschrieben und erläutert. Es zeigen:
- Figur 1: einen Rechner einer Druckmaschine, welcher über das Internet mit dem Verwaltungsrechner eines Druckmaschinenherstellers kommunizieren kann,
- Figur 2: ein Flussdiagramm zum Ablauf der Übertragung von Betriebsdaten und
- Figur 3: den Ablauf zum Freischalten einer bestimmten Funktion einer Druckmaschine.

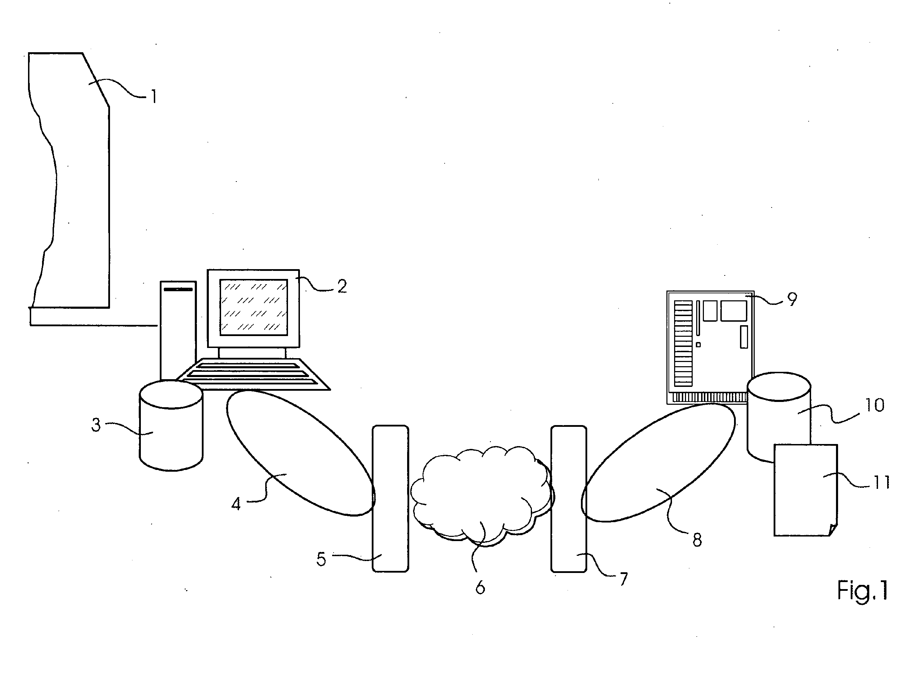

In Figur 1 ist am linken Bildrand schematisch eine Druckmaschine 1 dargestellt, welche einen Leitstandsrechner 2 aufweist. Dieser Leitstandsrechner 2 der Druckmaschine steuert sämtliche Funktionen und Betriebsabläufe der Druckmaschine 1 und ermöglicht es dem Bedienpersonal, die für einen Druckauftrag notwendigen Eingaben vorzunehmen. Der Leitstandsrechner 2 verfügt über einen Datenspeicher 3 zur Ablage von Betriebsdaten der Druckmaschine 1. Die Betriebsdaten der Druckmaschine 1 werden dabei laufend oder in bestimmten zeitlichen Abständen über Sensoren in der Druckmaschine 1 erfasst und im Datenspeicher 3 abgelegt. Der Leitstandsrechner 2 ist mit einem lokalen Netzwerk 4 einer Druckerei verbunden, sodass der Leitstandsrechner 2 mit anderen Maschinen in der Druckerei kommunizieren kann. Ein solches lokales Netzwerk kann ein Intranet sein, oder ein drahtgebundenes LAN- bzw. drahtloses WLAN-Netzwerk. Das lokale Netzwerk 4 ist vom öffentlich zugänglichen Internet 6 durch eine Firewall 5 getrennt, sodass Unbefugte keinen Zugriff auf die Daten im lokalen Netzwerk 4 der Druckerei haben. Beim Hersteller der Druckmaschine 1 ist ein Verwaltungsrechner 9 vorhanden, welcher in der Lage ist, die vom Leitstandsrechner 2 der Druckmaschine 1 erfassten Betriebsdaten entgegenzunehmen und auszuwerten. Zu diesem Zweck verfügt der Verwaltungsrechner 9 ebenfalls über einen Datenspeicher 10. In diesem Datenspeicher 10 können neben den erfassten Betriebsdaten zusätzlich Lizenzen für einzelne Funktionen der Druckmaschine 1 abgelegt sein. Auch der Verwaltungsrechner 9 ist in Figur 1 an ein lokales Netzwerk 8 des Herstellers angeschlossen, welches wiederum durch eine Firewall 7 vom Internet 6 abgeschottet ist.

Bei der Übertragung von Betriebsdaten vom Leitstandsrechner 2 zum Verwaltungsrechner 9 werden die Betriebsdaten über das lokale Netzwerk 4 der Druckerei durch die Firewall 5 der Druckerei hindurch in das Internet 6 übertragen und von dort durch die Firewall 7 des Herstellers an das lokale Netzwerk 8 des Herstellers weitergesendet. Am Ende erreichen sie den Verwaltungsrechner 9 und werden dort ebenfalls abgespeichert. Diese Übertragung der Betriebsdaten findet jedoch nur statt, wenn der Vorgang entsprechend autorisiert wurde und die beteiligten Rechner 2, 9 als zulässig identifiziert wurden. Die Datenübertragung zwischen den Rechnern 2, 9 findet nur auf verschlüsseltem Wege statt, so dass Unbefugte während der Datenübertragung über das Internet keinen Zugriff auf die Daten haben. Hierzu kann eine bekannte SSL- Verschlüsselung angewendet werden. Auf umgekehrtem Wege können vom Verwaltungsrechner 9 zum Leitstandsrechner 2 entsprechende Freischaltungen von Funktionen an der Druckmaschine 1 vorgenommen werden, wenn der Betreiber der Druckmaschine 1 die entsprechenden Lizenzen zur Freischaltung der Funktionen besitzt. Diese Lizenzberechtigungen werden in einer separaten Datei 11 auf dem Verwaltungsrechner 9 abgespeichert, welche die Vertragsinformationen 11 zwischen dem Hersteller und dem Betreiber der Druckmaschine 1 enthält. Wenn entsprechende Vertragsinformationen vorliegen, so kann der Verwaltungsrechner 9 die zulässigen Funktionen frei schalten, indem er ein entsprechendes Signal an den Leitstandsrechner 2 der Druckmaschine 1 sendet.

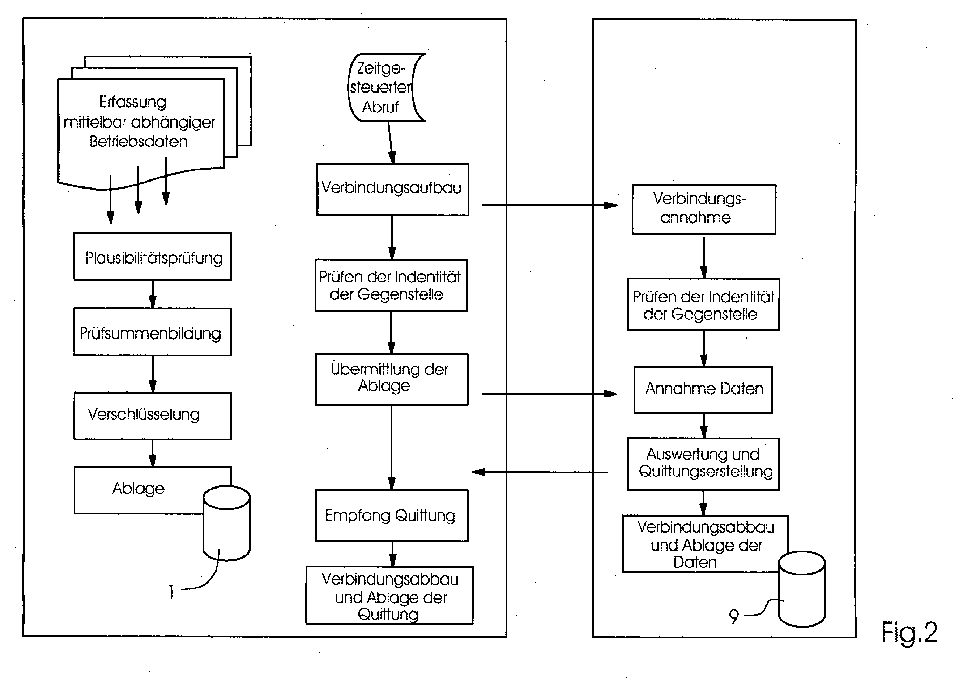

Figur 2 zeigt den Ablauf der Übertragung von Betriebsdaten von der Druckmaschine 1 zum Verwaltungsrechner 9. Zunächst werden in der Druckmaschine 1 mittels der dort vorhandenen Sensoren bzw. der vom Rechner 2 der Druckmaschine erfassten Eingaben des Bedienpersonals zum jeweiligen Druckauftrag die benötigten Betriebsdaten permanent oder in bestimmten zeitlichen Abständen erfasst. Vor der Abspeicherung der Betriebsdaten werden diese zunächst im Leitstandsrechner 2 der Druckmaschine auf Plausibilität geprüft. Falls dabei keine Fehler oder Auffälligkeiten festgestellt werden können, so werden die Betriebsdaten mittels einer Prüfsumme eines Hashcodes versehen und vor Veränderung geschützt. Zusätzlich werden die so geschützten Betriebsdaten mittels eines asymmetrischen Verschlüsselungsverfahren vor unbefugten Zugriffen geschützt. Zur Verschlüsselung wird eine digitale Signatur des Herstellers verwendet, wobei bei diesem asymmetrischen Verfahren der Leitstandsrechner 2 die verschlüsselten Daten lediglich schreiben aber nicht lesen kann. Auf diese Art und Weise ist eine Manipulation der abgespeicherten Betriebsdaten durch das Bedienpersonal an der Druckmaschine 1 unmöglich. Im Leitstandsrechner 2 der Druckmaschine 1 ist entweder ein Meldeplan hinterlegt, oder es wird ein solcher vom Verwaltungsrechner 9 an den Leitstandsrechner 2 übertragen. In diesem Meldeplan ist festgelegt, zu welchen Zeitpunkten der Leitstandsrechner 2 mit dem Verwaltungsrechner 9 eine Verbindung zur Übertragung von Betriebsdaten aufnehmen muss. Falls ein vorgegebener Zeitpunkt erreicht ist, so erfolgt der Verbindungsaufbau zum Verwaltungsrechner 9 über das Internet 6. Dabei wird zunächst auf dem Rechner 2 der Maschine die Identität der Gegenstelle geprüft, so dass sichergestellt ist, dass nicht unbefugte Dritte an die Betriebsdaten gelangen können. Dieselbe Vorgehensweise erfolgt auf der Seite des Verwaltungsrechners 9, auch hier wird die Identität des Leitstandsrechners 2 zunächst überprüft, wobei bei erfolgreicher Prüfung im Leitstandsrechner 2 und im Verwaltungsrechner 9 die verschlüsselt abgespeicherten Daten der Druckmaschine 1 an den Verwaltungsrechner 9 übermittelt werden. Dieser speichert die Daten zunächst ab und nimmt dann eine Auswertung vor. Falls die Übertragung der Daten erfolgreich war, sendet der Verwaltungsrechner 9 an den Leitstandsrechner 2 ein Quittierungssignal zurück. Sobald der Leitstandsrechner 2 das Quittierungssignal empfangen hat, unterbricht er die Verbindung zum Verwaltungsrechner 9 und speichert die Quittierung in seinem Datenspeicher ab. Auf diese Art und Weise verfügt der Leitstandsrechner 2 über ein Protokoll über sämtliche erfolgten Datenabfragen durch den Verwaltungsrechner 9 des Herstellers. Nach der Abgabe des Quittierungssignals bricht auch der Verwaltungsrechner 9 die Verbindung zum Leitstandsrechner 2 ab und speichert die empfangenen Daten im Datenspeicher 10 ab. Damit sind die Betriebsdaten sicher vom Maschinenrechner 2 zum Verwaltungsrechner 9 übertragen worden.

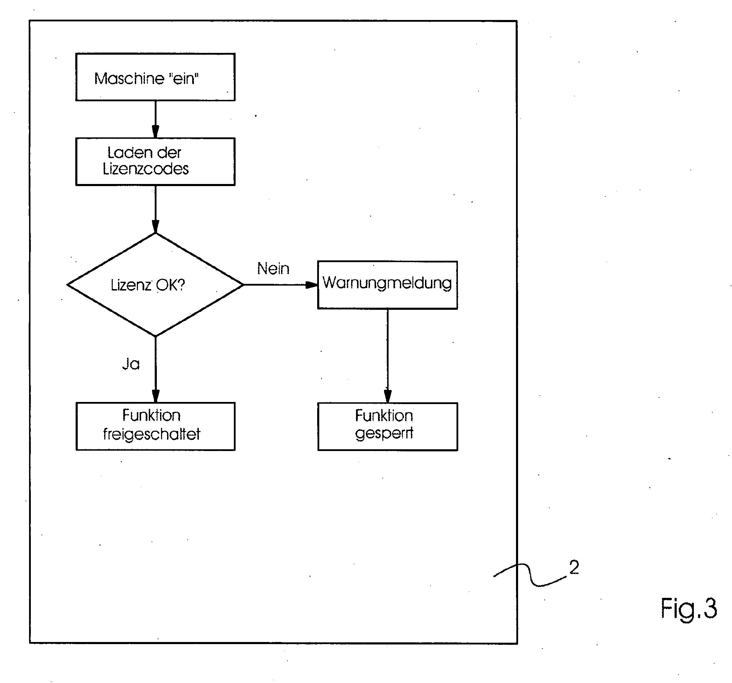

In Figur 3 ist die Überprüfung von Lizenzen bei der Inbetriebnahme von bestimmten Funktionen an einer Druckmaschine 1 durch den Hersteller abgebildet. Unter Lizenzen ist hier die Freischaltung von bestimmten Funktionen zu verstehen, welche in der Software der Druckmaschine 1 im Leitstandsrechner 2 bereits ab Werk abgelegt sind, aber nur gegen entsprechendes Entgelt oder auf Grund vertraglicher Vereinbarungen vom Hersteller frei geschaltet werden. Wenn die Druckmaschine 1 vom Betriebspersonal eingeschaltet wird, so werden zunächst sämtliche im Leitstandsrechner 2 der Druckmaschine abgespeicherten Lizenzcodes in den Arbeitsspeicher zur Überprüfung geladen. Sollten nicht alle Funktionen durch entsprechende Lizenzen frei geschaltet sein, so werden diese Funktionen mittels einer Warnmeldung angezeigt, bzw. es wird diejenige Funktion mit einer Warnmeldung versehen, welche gerade vom Betriebspersonal ausgewählt wurde, aber nicht lizenziert ist. Nach Abgabe der Warnmeldung wird die Funktion gesperrt. Es ist daher dem Betriebspersonal nicht möglich, nicht lizenzierte Funktionen an der Druckmaschine 1 in Betrieb zu nehmen. Falls die Funktionen jedoch ordnungsgemäß lizenziert sind, so werden diese entsprechend frei geschaltet und können verwendet werden.

In der Software des Leitstandsrechners 2 kann eine Möglichkeit vorgesehen sein, weitere Lizenzen im Austausch mit dem Verwaltungsrechner 9 des Herstellers zu erwerben. In diesem Fall kann der Betreiber der Druckmaschine 1 auf dem Leitstandsrechner 2 über einen Bildschirm und ein entsprechendes Eingabegerät wie eine Maus, Tastatur oder einen Touchscreen die gewünschten, noch nicht frei geschalteten Funktionen auswählen und eine Anfrage an den Verwaltungsrechner 9 des Herstellers richten. In einer Rückmeldung werden dann dem Betreiber vom Leitstandsrechner 2 der Druckmaschine die möglichen Kosten für die Freischaltung der gewünschten Funktionen angezeigt, welche dann der Betreiber entweder bestätigt oder ablehnt. Falls der Betreiber ablehnt, bleiben die entsprechenden Funktionen gesperrt, stimmt er jedoch zu, so werden die entsprechenden Lizenzcodes vom Verwaltungsrechner 9 über das Internet 6 an den Leitstandsrechner 2 geschickt und dort abgespeichert. Auch diese Lizenzcodes sind entsprechend verschlüsselt, sodass sie gegen Manipulationen durch den Betreiber der Druckmaschine 1 geschützt sind. Nach der Übertragung der Lizenzcodes wird die entsprechende Funktion an der Druckmaschine 1 frei geschaltet und kann fortan verwendet werden. Die Bezahlung der frei geschalteten Funktionen kann dann von dem Verwaltungsrechner 9 automatisch mit dem Servicevertrag des Betreibers der Druckmaschine 1 verrechnet werden, sodass eine entsprechend erhöhte Servicegebühr fällig wird. Es ist aber auch möglich, die Bezahlung direkt beim Herunterladen der Lizenz über die Angabe eines Lastschriftkontos oder einer Kreditkartennummer des Betreibers der Druckmaschine 1 vorzunehmen. Auf diese Art und Weise ist es möglich, sämtliche Funktionen einer Druckmaschine 1 ab Werk vorzusehen und an den Kunden auszuliefern, diese jedoch nicht standardmäßig frei zu schalten, und so die Maschine zu einem günstigeren Preis anbieten zu können. Falls sich herausstellt, dass der Betreiber der Druckmaschine 1 zusätzlichen Bedarf an Funktionen hat, so müssen diese Funktionen nicht erst umständlich nachgerüstet werden, sondern können online frei geschaltet werden. Dies erspart den Einsatz von Servicepersonal, was andernfalls diese Funktionen durch die Installation der entsprechenden Software vor Ort beim Kunden erst frei schalten müsste. Es ist außerdem möglich, bestimmte Lizenzen nur für einen bestimmten Zeitraum zu erwerben, wenn bestimmte Druckaufträge ausgeführt werden sollen, die diese Funktionen erforderlich machen. Die für einen bestimmten begrenzten Zeitraum erworbenen Funktionen können dann entsprechend preisgünstiger angeboten und erworben werden. Sobald der gewünschte Zeitraum abgelaufen ist, werden die Funktionen auf dem Leitstandsrechner 2 der Druckmaschine 1 wieder gesperrt und können nicht mehr verwendet werden.

Mit der vorliegenden Erfindung ist es also nicht nur möglich, einen maximalen Schutz von Betriebsdaten vorzusehen, welche zur Überwachung und zur Durchführung von Servicemaßnahmen an den Hersteller übermittelt werden, sondern es ist auch möglich, Lizenzen für bestimmte Funktionen der Druckmaschine ohne den Einsatz von Servicetechnikern frei zu schalten. Die eingesetzten Verschlüsselungstechniken stellen sicher, dass keine Manipulationen durch Unbefugte möglich sind.

### Bezugszeichenliste

- 1: Druckmaschine
- 2: Leitstandsrechner der Druckmaschine
- 3: Datenspeicher des Leitstandsrechners zur Ablage von Betriebsdaten
- 4: Lokales Netzwerk Druckerei
- 5: Firewall Druckerei
- 6: Internet
- 7: Firewall Lizenzgeber
- 8: Lokales Netzwerk des Lizenzgebers
- 9: Verwaltungsrechner für Lizenzen
- 10: Datenspeicher des Verwaltungsrechners
- 11: Vertragsinformationen

## Patentansprüche

1. Verfahren zur Übertragung von Betriebsdaten bei Druckmaschinen oder Maschinen zur Druckweiterverarbeitung (1) über ein öffentlich zugängliches Kommunikationsnetz (6) zu wenigstens einem über das öffentliche Kommunikationsnetz (6) erreichbaren Verwaltungsrechner (9) zur Fernwartung,
**dadurch gekennzeichnet,**
**dass** die Betriebsdaten der Druckmaschine oder Maschine zur Druckweiterverarbeitung (1) in wenigstens einem der Druckmaschine oder Maschine zur Druckweiterverarbeitung (1) zugeordneten Rechner (2) verschlüsselt abgespeichert werden und dass die verschlüsselten Betriebsdaten über das öffentlich zugängliche Kommunikationsnetz (6) zu dem Verwaltungsrechner (9) übertragen und auf dem Verwaltungsrechner (9) zur Fernwartung abgespeichert werden.

2. Verfahren nach Anspruch 1,
**dadurch gekennzeichnet,**
**dass** die Betriebsdaten über das öffentlich zugängliche Kommunikationsnetz (6) verschlüsselt übertragen werden.

3. Verfahren nach Anspruch 1. oder 2,
**dadurch gekennzeichnet,**
**dass** die Betriebsdaten vor der Abspeicherung in dem der Druckmaschine oder Maschine zur Druckweiterverarbeitung (1) zugeordneten Rechner (2) mittels einer Kodierung vor Veränderung geschützt werden.

4. Verfahren nach einem der vorhergehenden Ansprüche,
**dadurch gekennzeichnet,**
**dass** die Betriebsdaten vor der Abspeicherung in dem der Druckmaschine oder Maschine zur Druckweiterverarbeitung (1) zugeordneten Rechner (2) einer Plausibilitälsprüfung unterzogen werden.

5. Verfahren nach einem der vorhergehenden Ansprüche,
**dadurch gekennzeichnet,**
**dass** der Verwaltungsrechner (9) zur Fernwartung mit einer digitalen Signatur versehen ist und dass die Betriebsdaten von dem der Druckmaschine oder Maschine zur Druckweiterverarbeitung (1) zugeordneten Rechner (2) über das öffentliche Kommunikationsnetz (6) nur zu einem Rechner (9) übertragen werden, welcher dieselbe digitale Signatur aufweist.

6. Verfahren nach einem der vorhergehenden Ansprüche,
**dadurch gekennzeichnet,**
**dass** der erfolgreiche Empfang der Betriebsdaten durch den Verwaltungsrechner (9) zur Fernwartung über ein Quittiersignal an den der Druckmaschine oder Maschine zur Druckweiterverarbeitung (1) zugeordneten Rechner (2) signalisiert wird.

7. Verfahren nach einem der vorergehenden Ansprüche,
**dadurch gekennzeichnet,**
**dass** dem der Druckmaschine oder Maschine zur Druckweiterverarbeitung (1) zugeordneten Rechner (2) feste Übertragungszeitpunkte zugeordnet sind, zu denen der Rechner (2) Betriebsdaten an den Verwaltungsrechner (9) zur Fernwartung überträgt.

8. Verfahren nach Anspruch 7,
**dadurch gekennzeichnet,**
**dass** ein Nichterfolgen der Übertragung von Betriebsdaten zu einem vorgegebenen Übertragungszeitpunkt vom Verwaltungsrechner (9) zur Fernwartung erfasst und protokolliert wird.

9. Verfahren nach Anspruch 7 oder 8,
**dadurch gekennzeichnet,**
**dass** beim Ausbleiben der Übertragung von Betriebsdaten zum Verwaltungsrechner (9) zur Fernwartung hei vorgegebenen Übertragungszeitpunkten eine Rückmeldung vom Verwaltungsrechner (9) zur Fernwartung über öffentlich zugängliche Kommunikationsnetz (6) zu dem der Druckmaschine oder Maschine zur Druckweiterverarbeitung (1) zugeordneten Rechner (2) erfolgt.

10. Verfahren nach Anspruch 9,
**dadurch gekennzeichnet,**
**dass** beim Ausbleiben der Übertragung von Betriebsdaten an den Verwaltungsrechner (9) zur Fernwartung Funktionen der Druckmaschine oder Maschine zur Druckweiterverarbeitung (1) gesperrt werden.

11. Verfahren nach einem der vorhergehenden Ansprüche,
**dadurch gekennzeichnet,**
**dass** der Rechner (2), welcher der Druckmaschine oder Maschine zur Druckweiterverarbeitung (1) zugeordnet ist, vom öffentlich zugänglichen Kommunikationsnetz (6) durch eine Zugangsschutzeinrichtung (5) getrennt ist.

12. Verfahren nach einem der vorhergehenden Ansprüche,
**dadurch gekennzeichnet,**
**dass** der Verwaltungsrechner (9) zur Fernwartung vom öffentlich zugänglichen Kommunikationsnetz (6) durch eine Zugangsschutzeinrichtung (7) getrennt ist.

13. Verfahren nach einem der vorhergehenden Ansprüche,
**dadurch gekennzeichnet,**
**dass** auf Anfrage eines Betreibers der Druckmaschine oder Maschine zur Druckweiterverarbeitung (1) vom Verwaltungsrechner (9) zur Fernwartung Lizenzen zur Freischaltung ausgewählter Funktionen der Druckmaschine oder Maschine zur Druckweiterverarbeitung (1) an den Maschinenrechner (2) gesendet werden.

14. Verfahren nach einem der vorhergehenden Ansprüche,
**dadurch gekennzeichnet,**
**dass** bei der Inbetriebnahme der Druckmaschine oder Maschine zur Druckweiterverarbeitung (1) vom Maschinenrechner (2) Lizenzen auf ihre Gültigkeit hin überprüft werden und dass die zu diesen Lizenzen gehörenden Funktionen der Druckmaschine oder Maschine zur Druckweiterverarbeitung (1) nur bei positiver Prüfung frei geschaltet werden.

15. Verfahren nach Anspruch 14,
**dadurch gekennzeichnet,**
**dass** die Dauer der Freischaltung von Funktionen zeitlich limitiert ist.

## Claims

1. Method for transmitting operating data of printing presses or machinery for the further processing of printed products (1) to at least one administrative computer for remote maintenance via a publicly accessible communication network (6),
**characterized in**
**that** the operating data of the printing press or machine for the further processing of printed products (1) are stored in an encrypted way in at least one computer (2) associated with the printing press or machine for the further processing of printed products (1) and that the encrypted operating data are transmitted to the administrative computer (9) via the publicly accessible communication network (6) and are stored on the administrative computer (9) for remote maintenance.

2. Method according to Claim 1,
**characterized in**
**that** the operating data are transmitted via the publicly accessible communication network (6) in an encrypted way.

3. Method according to Claim 1 or 2,
**characterized in**
**that** before being stored in the computer (2) associated with the printing press or the machine for the further processing of printed products (1) the operating data are protected against modification by means of an encoding.

4. Method according to one of the preceding claims,
**characterized in**
**that** before being stored in the computer (2) associated with printing press or the machine for the further processing of printed products (1)the operating data are subjected to a plausibility check.

5. Method according to one of the preceding claims,
**characterized in**
**that** the administrative computer (9) for remote maintenance is provided with a digital signature and that the operating data are transmitted by the computer (2) associated with the printing press or machine for the further processing of printed products (1) via the public communication network (6) only to a computer (9) that has the same digital signature.

6. Method according to one of the preceding claims,
**characterized in**
**that** the successful reception of the operating data by the administrative computer (9) for remote maintenance is signalled to the computer (2) associated with the printing press or machine for the further processing of printed products (1) by an acknowledgement signal.

7. Method according to one of the preceding claims,
**characterized in**
**that** fixed transmission times at which the computer (2) transmits operating data to the administrative computer (9) for remote maintenance are assigned to the computer associated with the printing press or machine for the further processing of printed products (1).

8. Method according to Claim 7,
**characterized in**
**that** the administrative computer (9) for remote maintenance registers and records a non-occurrence of a transmission of operating data at a predetermined transmission time.

9. Method according to Claim 7 or 8,
**characterized in**
**that** when no transmission of operating data to the administrative computer (9) for remote maintenance occurs at predetermined transmission times, the administrative computer (9) for remote maintenance provides feedback to the computer (2) associated with the printing press or machine for the further processing of printed products (1) via the publicly accessible communication network (6).

10. Method according to Claim 9,
**characterized in**
**that** when no transmission of operating data to the administrative computer (9) for remote maintenance occurs, functions of the printing press or machine for the further processing of printed products (1) are blocked.

11. Method according to one of the preceding claims,
**characterized in**
**that** the computer (2) that is associated with the printing press or machine for the further processing of printed products (1) is separated from the publicly accessible communication network (6) by an access protection device (5).

12. Method according to one of the preceding claims,
**characterized in**
**that** the administrative computer (9) for remote maintenance is separated from the publicly accessible communication network (6) by an access protection device (7).

13. Method according to one of the preceding claims,
**characterized in**
**that** upon request of an operator of the printing press or machine for the further processing of printed products (1) the administrative computer (9) for remote maintenance sends licences to the machine computer (2) to activate selected functions of the printing press or machine for the further processing of printed products (1).

14. Method according to one of the preceding claims,
**characterized in**
**that** upon the startup of the printing press or machine for the further processing of printed products (1) the machine computer (2) checks licences in terms of their validity and that the functions of the printing press or machine for the further processing of printed products (1) that belong to these licences are only activated when the check is positive.

15. Method according to Claim 14,
**characterized in**
**that** the duration of the activation of function is limited in time.

## Revendications

1. Procédé pour le transfert de données de service dans des machines d'impression ou des machines pour le façonnage (1) de produits imprimés par l'intermédiaire d'un réseau de communication publiquement accessible (6) à au moins un ordinateur de gestion (9) accessible par le réseau de communication publique (6) pour la télémaintenance, **caractérisé en ce que** les données de service de la machine d'impression ou de la machine pour le façonnage (1) de produits imprimés sont stockées et cryptées dans au moins un ordinateur (2) associé à la machine d'impression pour le façonnage (1) de produits imprimés et **en ce que** les données de service cryptées sont transmises par le réseau de communication publiquement accessible (6) à l'ordinateur de gestion (9) et sont stockées sur l'ordinateur de gestion (9) pour la télémaintenance.

2. Procédé selon la revendication 1, **caractérisé en ce que** les données de service sont transmises cryptées par le réseau de communication publiquement accessible (6).

3. Procédé selon la revendication 1 ou 2, **caractérisé en ce que** les données de service sont protégées contre la modification avant le stockage dans l'ordinateur (2) associé à la machine d'impression ou à la machine pour le façonnage (1) de produits imprimés.

4. Procédé selon l'une des revendications précédentes, **caractérisé en ce que** les données de service sont soumises à un contrôle de plausibilité avant le stockage dans l'ordinateur (2) associé à la machine d'impression ou la machine pour le façonnage (1) de produits imprimés.

5. Procédé selon l'une des revendications précédentes, **caractérisé en ce que** l'ordinateur de gestion (9) est muni d'une signature numérique pour la télémaintenance et **en ce que** les données de service sont transmises via le réseau de communication publiquement accessible (6) par l'ordinateur (2) associé à la machine d'impression ou la machine pour le façonnage (1) de produits imprimés uniquement à un ordinateur (9) qui présente la même signature numérique.

6. Procédé selon l'une des revendications précédentes, **caractérisé en ce que** la réception réussie des données de service est signalée par l'ordinateur de gestion (9) pour la télémaintenance par un signal de validation à l'ordinateur (2) associé à la machine d'impression ou la machine pour le façonnage (1) de produits imprimés.

7. Procédé selon l'une des revendications précédentes, **caractérisé en ce que** l'ordinateur (2) associé à la machine d'impression ou la machine pour le façonnage (1) de produits imprimés est associé à des moments de transmission auxquels transmet l'ordinateur (2) des données de service à l'ordinateur de gestion (9) pour la télémaintenance.

8. Procédé selon la revendication 7, **caractérisé en ce qu'**une non exécution de la transmission de données de service à un moment de transmission prédéterminé est saisie par l'ordinateur de gestion (9) pour la télémaintenance et est protocollée.

9. Procédé selon la revendication 7 ou 8, **caractérisé en ce qu'**en cas d'absence de la transmission de données de service à l'ordinateur de gestion (9) pour la télémaintenance aux moments de transmission prédéterminés, il est effectué une réponse de l'ordinateur de gestion (9) pour la télémaintenance par le réseau de communication (6) publiquement accessible à l'ordinateur (2) associé à la machine d'impression ou la machine pour le façonnage (1) de produits imprimés.

10. Procédé selon la revendication 9, **caractérisé en ce qu'**en absence de transmission de données de service à l'ordinateur de gestion (9) pour la télémaintenance, des fonctions de la machine d'impression ou de la machine pour le façonnage (1) de produits imprimés sont bloquées.

11. Procédé selon l'une des revendications précédentes, **caractérisé en ce que** l'ordinateur (2) associé à la machine d'impression ou la machine pour le façonnage (1) de produits imprimés est coupé du réseau de communication (6) publiquement accessible par un dispositif de protection d'accès (5).

12. Procédé selon l'une des revendications précédentes, **caractérisé en ce que** l'ordinateur de gestion (9) pour la télémaintenance est coupé du réseau de communication (6) publiquement accessible par un dispositif de protection d'accès (7).

13. Procédé selon l'une des revendications précédentes, **caractérisé en ce que** dans un but de télémaintenance sur demande d'un utilisateur de la machine d'impression ou de la machine pour le façonnage (1) de produits imprimés, l'ordinateur de gestion (9) peut envoyer des licences pour la libération de fonctions sélectionnées de la machine d'impression ou de la machine pour le façonnage (1) de produits imprimés à l'ordinateur de machine (2).

14. Procédé selon l'une des revendications précédentes, **caractérisé en ce qu'**à la mise en service de la machine d'impression ou de la machine de façonnage (1) de produits imprimés, l'ordinateur de machine (2) vérifie la validité des licences et **en ce que** les fonctions associées aux licences de la machine d'impression ou de la machine pour le façonnage (1) de produits imprimés ne sont libérées qu'en cas de contrôle positif.

15. Procédé selon la revendication 14, **caractérisé en ce que** la durée de la libération de fonctions est limitée dans le temps.
